Europäisches Patentamt

European Patent Office

Office européen des brevets

(11) Publication number: **0 135 967**
A1

# EUROPEAN PATENT APPLICATION

(21) Application number: **84201309.6**

(22) Date of filing: **11.09.84**

(51) Int. Cl.⁴: **A 22 B 7/00**

(30) Priority: **12.09.83 NL 8303147**

(43) Date of publication of application: **03.04.85**
Bulletin **85/14**

(84) Designated Contracting States: **AT BE CH DE FR GB IT LI LU NL SE**

(71) Applicant: **MACHINEFABRIEK G.J. NIJHUIS B.V., Parallelweg 4, NL-7102 DE Winterswijk (NL)**

(72) Inventor: **Nijhuis, Gerrit Jan, Rusthuisstraat 10, NL-7101 JH Winterswijk (NL)**

(74) Representative: **van der Beek, George Frans et al, Nederlandsch Octrooibureau Johan de Wittlaan 15 P.O. Box 29720, NL-2502 LS 's-Gravenhage (NL)**

(54) Apparatus for removing in a slaughter line the lower leg parts or paws of the hind legs of slaughter cattle.

(57) The invention relates to an apparatus in a slaughter line comprising a feed track for moving the carcasses, said track having a section at which the hind legs of the slaughter cattle have to be removed said track having falling, rising and horizontal pathes such that a carcass hanging at one leg is processed at the other leg after which suspension is taken over by the processed leg and the other leg is processed and then connected to the hook as well.

EP 0 135 967 A1

ACTORUM AG

11.09.84

0135967

Apparatus for removing in a slaughter line the lower leg parts or paws of the hind legs of slaughter cattle.

The invention relates to an apparatus for removing in a slaughter line the lower leg parts or paws of the hind legs of slaughter cattle, particularly calves, which consists of a tubular feed track with a carrier conveyor by which the carcasses are fed, hanging by one leg, by means of a chain suspended on the tubular track and looped around the bottom end of the leg as they come from the bleeding section, a second conveyor on which the carcasses can be suspended with the aid of an auxiliary hook pushed into the leg being processed, and a discharge conveyor with a tubular track, on which the carcasses can be suspended with the aid of a spreader pushed into both legs being processed.

An apparatus of this kind is known in practice. In this known apparatus the carcass, hanging on a leg chain, is fed via a tubular track with a carrier conveyor. The other hind leg hangs free and, on reaching this part of the slaughter line, after being processed and provided with an intermediate hook, is lifted and suspended on a rail with the aid of a hoist, such as a pneumatically operated hoist. The leg with the leg chain then becomes free through the transfer of the weight of the carcass, so that the leg chain can be removed and the leg thus released can be processed. An auxiliary hook is then also inserted into the second leg, which is raised with the aid of a hoist and likewise suspended on a rail. The spreader is then attached and is transferred to the discharge track, so that the intermediate hooks can be removed.

With this known apparatus high productivity is not possible, because a smooth flow of the carcasses during the processing of the hind legs and the transfer is not possible.     At the positions of the hoists, which lift the processed legs hanging on the intermediate hooks, each carcass hangs practically without moving.

The invention seeks to provide an apparatus with which a continuous flow is possible, with shockfree transfer of the carcasses.

According to the invention, this aim is achieved in that the tubular feed track follows a falling path between a first horizontal feed section and a second horizontal section at a lower level, in that at the site of the falling path of the tubular track there is situated a rising section, crossing this falling path, of an auxiliary endless chain conveyor which extends in a vertical plane parallel to the vertical plane of the tubular feed track and is provided with hooks hanging from it, this rising section being followed by a horizontal section which is situated above the second horizontal portion of the tubular feed track, which horizontal portion of the first auxiliary conveyor is crossed by the falling section of a second auxiliary endless conveyor having a plurality of hooks hanging on chains, which second auxiliary conveyor extends in a plane parallel to the vertical plane of the first auxiliary chain conveyor, and in that both auxiliary conveyors then extend towards a common level lying above the position where the tubular discharge track begins, after which the common path falls before each of the two conveyors reaches its reversing pulley.

The carcasses coming into the processing section via the tubular feed track can now be processed on the leg hanging free before the tubular track moves downwards. Since the first auxiliary conveyor crosses the falling section of the tubular track, this first auxiliary conveyor has a feed section which lies at a lower level and which makes it possible for the leg which is lying free and which has just been processed to be coupled to a hook mounted on a chain, as this chain is free from tension. Where the falling section and the rising section cross each other the load is taken over and the carcass is suspended by the processed leg, while the leg chain becomes free from tension and can be detached. In the horizontal section which then follows the second leg is first processed, after which, on crossing the falling section of the second auxiliary conveyor, this second leg can also be connected to an auxiliary hook of the second conveyor. As the two auxiliary conveyors are now brought to the same level, the weight is distributed evenly over the two legs, with the carcass lying transversely in relation to the direction of advance. The hooks carrying the hind legs hang on chains and thus allow some transverse displacement, so that the spreader can easily be attached by placing it with its pointed ends between the mutually facing inside surfaces of the hind leg parts, after which the transverse components of the weight ensure that the hooks penetrate well into or remain in the legs. As this common path of the auxiliary conveyoers now extends further downwards, the spreader comes to hang on the tubular discharge track and the auxiliary hooks can be detached because the chains are no longer under tension. Because the carcasses are continuously in movement and because the conveyor paths cross so that the transfer takes place gradually, the personnel effecting the processing can always move with the carcass being processed. There are no longer any interruptions in the processing because of stoppages, and production can therefore be increased or the number of operators can be reduced.

It is observed that in practice another apparatus is known, in which carcasses hanging by one leg on a chain and coming from the bleeding section via a tubular track following a falling path arrive at a conveyor which, after the uncoupling of the leg chain, carries the carcasses onwards as they lie on their backs. While lying in this position, they are subjeted to various processing operations, including the removal of the lower leg parts, and finally the spreader is applied, after which the carcasses are lifted up and returned to a vertical position with the aid of a Jacob's ladder. Rapid, efficient processing is also not possible with this apparatus.

0135967

The invention will now be explained more fully with the aid of the drawing.

Figure 1 shows diagrammatically the paths of the different conveyors and the different processing stages.

Figures 2 to 7 are sections through Figure 1 on the lines II-II, III-III and so on up to VII-VII.

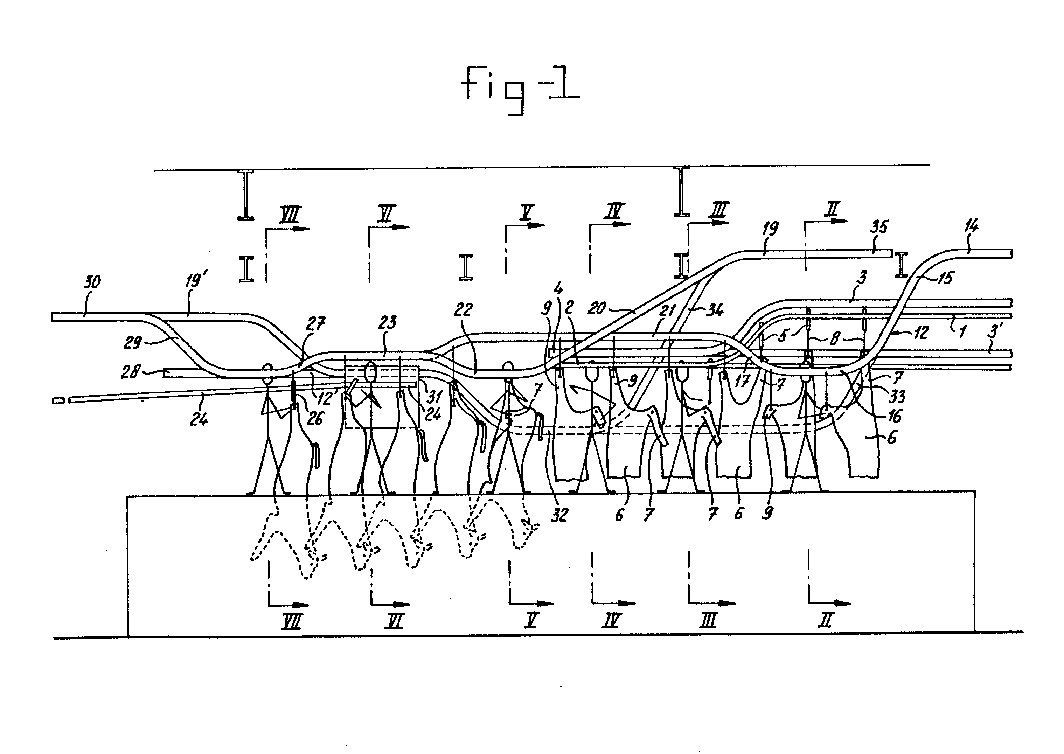

1 designates the tubular feed track. It has a reversing end (not shown) on the right of the drawing in Figure 1, and at 2 the left-hand reversing end.

Above it lies an endless conveyor chain 3 with its reversing end 4, this chain being provided in known manner with carriers (not shown) for moving hooks 5, on each of which a carcass 6 is suspended by one leg 7 with the aid of a leg chain 8 slung around the end of the leg.

In the right-hand horizontal feed portion of the tubular track 1 the freely hanging leg 9 is processed.

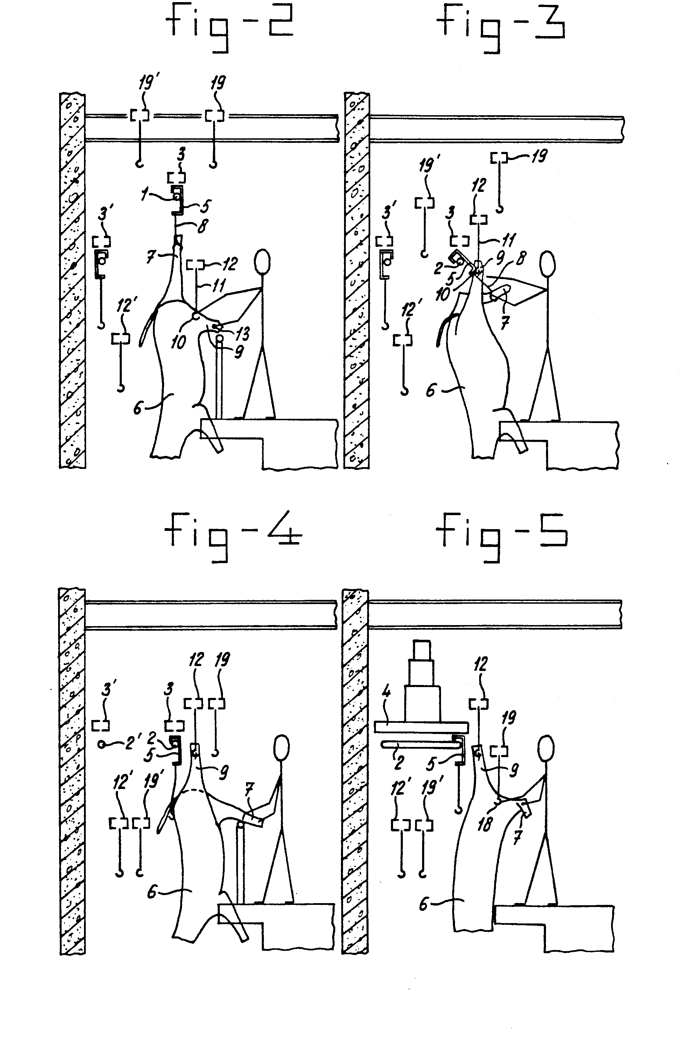

Figure 2 shows the situation after this leg 9 has been processed and this leg has been fastened to the hook 10 of a chain 11 of a first auxiliary endless conveyor 12. This hook is inserted into the leg at the point 13. The first auxiliary conveyor 12 has a right-hand reversing pulley at the point indicated by the numeral 14, followed by a falling section 15 which crosses the horizontal section 1,3 of the feed track, so that in the lower horizontal portion 16 of the first auxiliary conveyor 12 the operator can make use of hooks on untensioned chains for hooking onto the leg 9 which has just been processed.

The falling section 15 is necessary in connection with the feeding of the calves via the track 1, so that the reversing pulley must be placed in a higher position.

Figure 3 shows how in the rising section 17 of the first auxiliary conveyor the leg 9 is pulled up and the carcass is suspended thereon by means of a hook 10 and chain 11, while the leg chain on the leg 7 is freed from tension and can be detached.

Figure 4 then shows the position in which this leg chain is free and the operator can now work on the second leg which has been released.

After the processing of the second leg 7, with the carcass still hanging by the leg 9, the operator can make use of the auxiliary hook 18 of a second auxiliary endless conveyor 19, the falling section 20 of which crosses the horizontal portion 21 of the first auxiliary conveyor. As shown in Figure 5, the operator can then connect the leg 7 to the hook 18, approximately at the site of the horizontal portion 22 of the second auxiliary conveyor 19.

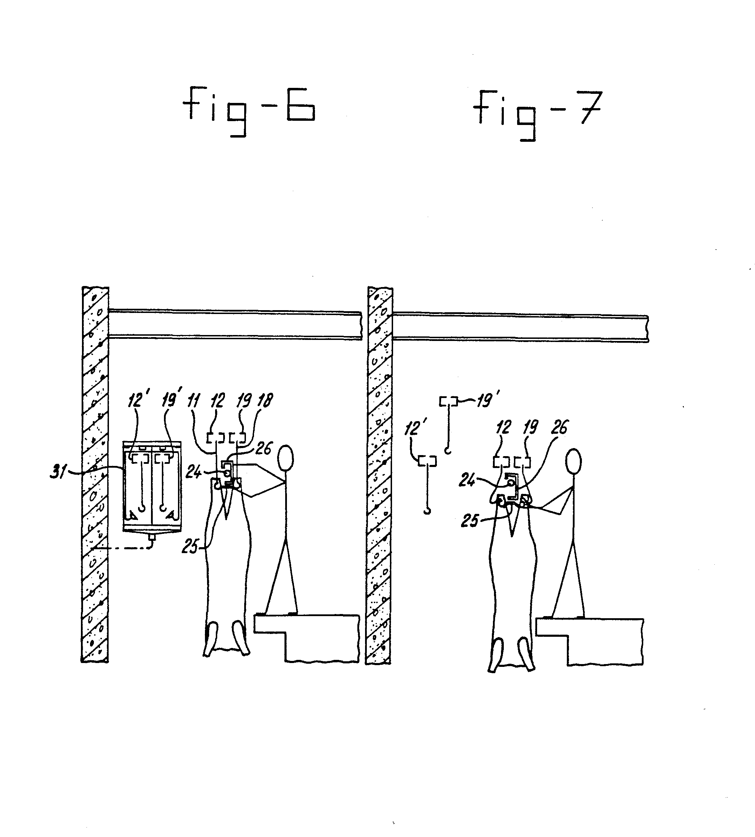

The horizontal parts 21 and 22 of the first and second auxiliary conveyors move towards one another and at 23 reach the same level, from which the carcasses thus hang by both legs on the two conveyors, while the legs are accurately positioned in the desired transverse plane. This portion 23 is situated above the begining of the tubular discharge track 24, where, as shown in Figure 6, the spreader 25 with the hook 26 can be attached.    This is done while the carcasses are hanging on the chains 18 and 11, so that the hook 26 of the spreader 25 has not yet come into contact with the tubular track 24.

The two auxiliary conveyors then run conjointly downwards, as indicated at 27, so that the chains 11 and 18 are freed from tension because the hook 26 comes to rest on the tubular track 24.    The hooks can then be removed as indicated in Figure 7.

The first auxiliary conveyor 12 then has at 28 a reversing pulley and the second auxiliary conveyor 19, via a rising section 29, reaches its reversing pulley at 30.    The returning parts 12' and 19' pass together through a washing apparatus indicated generally by 31, after which they extend via low-lying sections 32 and rising sections 33, 34 to the reversing pulleys lying at a high level, such as 14 and 35.    In Figures 2 to 7 all returning parts of tubular track and auxiliary conveyors are indicated by the same reference numerals followed by a prime.

The reason for these low and high portions are of a constructional nature, and applies only to the situation illustrated.   The high portions are needed in order to bring the chains 11,18 above the track 1,3 for the purposes of the reversing of the auxiliary conveyors.

The low portions are however in turn necessary in order to come under the leg chains 5,8 at the site of the reversing pulley 4.   It is not possible for the portions 12' and 19' to be taken out above the reversing end 4 because of the suspension beam indicated by the I-section in Figure 1.

With the apparatus according to the invention the operations are simplified and can be carried out with greater safety, so that it is possible to operate with a continuous flow and with higher production.

0135967

CLAIM

Apparatus in a slaughter line for removing the lower leg parts or paws of slaughter cattle, particularly calves, which consists of a tubular feed track with a carrier conveyor by which the carcasses are fed, hanging by one leg, by means of a chain suspended on the tubular track and looped around the bottom end of the leg as they come from the bleeding section, a second conveyor on which the carcasses can be suspended with the aid of an auxiliary hook pushed into the leg being processed, and a discharge conveyor with a tubular track, on which the carcasses can be suspended with the aid of a spreader pushed into both the legs being processed, characterised in that the tubular feed track follows a falling path between a first horizontal feed section and a second horizontal section at a lower level, in that at the site of the falling path of the tubular track there is situated a rising section, crossing this falling path, of an auxiliary endless chain conveyor which extends in a vertical plane parallel to the vertical plane of the tubular feed track and is provided with hooks hanging from it, this rising section being followed by a horizontal section which is situated above the second horizontal portion of the tubular feed track, which horizontal portion of the first auxiliary conveyor is crossed by the falling section of a sexcond auxiliary endless conveyor having a plurality of hooks hanging on chains, which second auxiliary conveyor extends in a plane parallel to the

0135967

vertical plane of the first auxiliary chain conveyor, and in that both auxiliary conveyors then extend towards a common level lying above the position where the tubular discharge track  begins, after which the common path falls before each of the two conveyors reaches its reversing pulley.

Fig-1

fig-2  fig-3

fig-4  fig-5

2/3

0135967

0135967

fig-6          fig-7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-2 883 700  (LIEBMANN) | | A 22 B    7/00 |
| | --- | | |
| A | DE-A-2 202 950  (DEUTSCHE ITT) | | |
| | ----- | | |

|  |  |  | TECHNICAL FIELDS SEARCHED (Int. Cl.4) |
|---|---|---|---|
|  |  |  | A 22 B |

The present search report has been drawn up for all claims

| Place of search | Date of completion of the search | Examiner |
|---|---|---|
| THE HAGUE | 03-01-1985 | VILBIG K |